# EUROPEAN PATENT SPECIFICATION

(11) **EP 1 015 776 B1**
(45) Date of publication and mention of the grant of the patent: **13.09.2006**
(21) Application number: 98944901.2
(22) Date of filing: 24.09.1998
(51) Int. Cl.: F16C 1/04, F16C 1/06, F16D 3/46

(54) **IMPROVED DRIVE ELEMENT**
STEUERUNGSELEMENT
ELEMENT D'ENTRAINEMENT AMELIORE

(30) Priority: 24.09.1997 AU 3921997; 02.12.1997 US 982703
(43) Date of publication of application: 05.07.2000
(73) Proprietor: Faircrest Holdings Pty. Ltd., Kardinya, W.A. 6163 (AU)
(72) Inventor: MAZAK, George, Dianella, W.A. 6062 (AU)
(74) Representative: Schoppe, Fritz
(86) International application number: PCT/AU1998/000801
(87) International publication number: WO 1999/015798

(56) References cited:
- FR-A- 2 318 337
- GB-A- 736 608
- GB-A- 971 401
- GB-A- 2 220 729
- US-A- 1 100 097
- US-A- 1 677 337
- US-A- 1 710 237
- US-A- 3 451 228

## Description

The present invention relates to an improved drive element for transmitting or transferring torque between two rotatable members.

Applicant's International Application No PCT/AU96/00193 describes a drive element and an articulated drive incorporating one or more of the drive elements for transmitting torque in both clockwise and anticlockwise directions and along straight and curved paths. In order to transmit torque around a bent or curved path, two or more drive elements are intermeshed and held within a supporting structure such as a tube. Articulated drives for transmitting torque in opposite directions along a curved path have been successfully constructed in this manner. However it has been recognised that the degree of curvature achievable is limited by the effect that the distance between two drive elements varies as degree or radius of curvature of the path along which the elements lie changes. Indeed, this ultimately limits the degree of curvature available for a specific articulated drive and increases the complexity of flexible articulated drives where additional mechanisms are required to compensate for the change in distance between adjacent drive elements with changing radius of curvature.

United States Patent No. 1,100,097 (*Reed*) discloses a flexible shaft having link members that are connected in series by connectors. The connectors have a generally globular shape and are provided with circumferential grooves that receive the jaws of the link members. In use, each link member rotates about a longitudinal axis. Adjacent link members can pivot relative to each other about a pivot point located at the geometric centre of the interposed connector. The jaws of the link members and circumferential grooves in the connectors are configured to maintain a substantially constant in between the pivot point and respective loci of each link member with the geometric centre of the connector for the predetermined range of angles of pivot of adjacent link members relative to one another.

It is an object of the present invention to provide an improved drive element with enhanced characteristics over that described in Applicant's earlier application.

This object is achieved by a drive element according to claim 1.

Preferably the predetermined range of angles is in the order of up to 50° to 60°.

Preferably the first and second coupling means extend in mutually perpendicular directions.

Preferably the first coupling means is formed as one of the projection and slot, and the second coupling means is formed as the other of the projection and slot. Although, in other embodiments, both the first coupling means and second coupling means can be in the same form, ie. both either a projection or both a slot.

Preferably the drive element is in the form of a sphere with material removed therefrom to produce said first and second coupling means.

According to another aspect of the present invention there is provided an articulated coupling comprising:
first and second rotatable shafts rotatable about their respective longitudinal axes; and,
a drive element according to claim 1 located between and coupled to the first and second rotatable shafts for transmitting torque from one of the shafts to the other shaft in a clockwise or anticlockwise direction.

According to another aspect of the present invention there is provided an articulated flexible drive for transmitting torque along a drive line in both clockwise and anticlockwise directions, said articulated flexible drive comprising a plurality of drive elements according to claim 1 and a flexible housing for rotatably retaining the drive elements along the drive line, the drive elements being rotatable about respective rotation axes tangent to the drive line and each having first and second coupling means to facilitate intermeshing of adjacent elements in the manner so that adjacent drive elements can slide relative to each other in planes containing the first and second coupling means of adjacent intermeshing drive elements.

Embodiments of the present invention will now be described by way of example only with reference to the accompanying drawings in which:
- Figure: 1 is a side view of a universal coupling incorporating a drive element in accordance with the present invention;
- Figure 2: is a side view of the coupling shown in Figure 1 but with all the components having been rotated 90°;
- Figure 3: is a view of the drive element as depicted in Figure 1;
- Figure 4: is a view of the drive element as depicted in Figure 2;
- Figure 5: is a side view of the coupling as depicted in Figure 1 but with the output shaft shown in a range of various inclinations.
- Figure 6: is a partial sectional view of an articulated flexible drive incorporating the drive element; and
- Figure 7: is an enlarged view of two of the drive elements of the articulated flexible drive shown in Figure 6.

As shown in the accompanying drawings a drive element 10 is provided for coupling together first and second rotatable members in the form of shafts 12 and 14. Shaft 12 is able to rotate about its longitudinal axis 12A while shaft 14 is able to rotate along its longitudinal axis 14A. The shafts 12 and 14 are able to pivot relative to each other about a pivot point P which is located at the intersection point of axis 12A and 14A when those axes are not in line. The drive element 10 is located between the shafts 12 and 14 with its geometric centre coincident with the pivot point P. End of shaft 12 adjacent the drive element 10 is provided with a projection or tongue 16, and end of shaft 14 adjacent the drive element 10 is provided with a slot or groove 18. In order for the drive element 10 to couple the shafts 12 and 14 together it is provided with a first coupling means in the form of a groove 20 for receiving the tongue 16 and a projection or tongue 22 which is seated in the slot 18.

When, for example, shaft 14 is driven to rotate about its axis 14A, torque is transmitted by drive element 10 to shaft 12 causing it to rotate about its axis 12A in the same direction of rotation of the shaft 14.

Together the shafts 12 and 14 and drive element 10 form a universal coupling 24. The pivoting of shaft 12 is in a plane which is coincident with the length of the slot 20. Shaft 14 is able to pivot in a transverse plane which is coincident with the plane containing the projection 22. In order to allow the shafts 12 and 14 to pivot relative to each other about pivot point P without changing the overall length of the universal coupling 24 the drive element 10 is configured to maintain a substantially constant spacing between the pivot point P and the respective loci of closest contact of the shafts 12 and 14 with the geometric centre P of the drive element 10 for a predetermined range of angles of pivot of the axis 12A and 14A relative to each other.

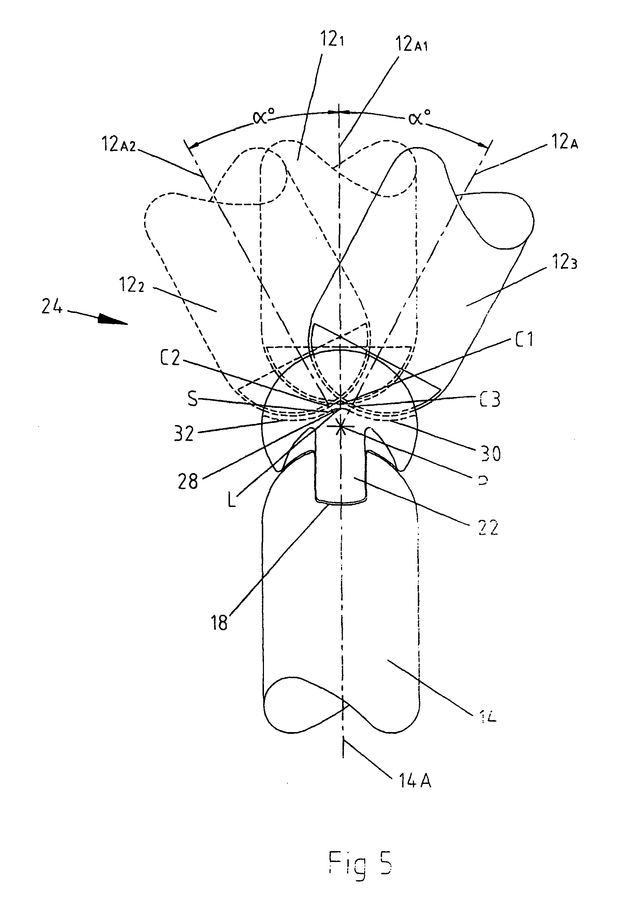

The loci of closest contact are best illustrated in Figure 5. This Figure illustrates the coupling 24 at a central position and two opposite pivoted positions. In the central position the shaft 12₁ has its axis of rotation 12_{A1} co-linear with the axis 14A. Pivoting the shaft 12 through an angle α in an anticlockwise direction leaves the shaft in a position shown by phantom shaft 12₂. Pivoting the shaft 12 from the central position in a clockwise direction places it at the position indicated by shaft 12₃. The point of closest contact of the shaft 12 in positions 12₁, 12₂ and 12₃ indicated as contact points C₁, C₂, and C₃ respectively. As the shaft is pivoted between positions 12₃ and 12₂ the points of closest contact C define a locus L of closest contact (ie. shortest distance) between the shaft 12 and the geometric centre P. The overall length of the universal coupling 24 can be kept substantially constant for a range of pivot angles plus or minus α of pivot axis 12A relative to pivot axis 14A by ensuring that all points along locus L remain the same distance from pivot point P. This is achieved by relieving or otherwise shaping the surface 26 of the element 10 at the root of the slot 20 in opposite directions from the midway point of the length of the slot 20. The surface 26 is relieved to have a compound shape comprising a central convex surface portion 28 and two opposite concave surface portions 30 and 32 (ref Fig. 3). The central convex surface portion 28 is of a shape or profile coincident with the locus L. The surface portions 28, 32 and 30 are continuously and smoothly formed. The concave surface portions 30 and 32 accommodate portions of the shaft 12 when in the pivoted positions 12₂ and 12₃ respectively.

It will be appreciated that if the surface 26 were planar then pivoting of the shaft 12 to positions 12₂ or 12₃ would be accompanied by a linear translation of the shaft 12 away from the geometric centre P because a shaft would be levered outwardly against the planar surface.

The surface 34 of the element 10 on opposite sides of tongue 22 is relieved or otherwise shaped in a manner similar to surface 26 so that as the shaft 14 is pivoted through plus and minus α° from a central line at which axes 14A and 12A are coincident, the distance from a locus of closest contact of the shaft 14 to the pivot point P remains constant. The surface 34 on opposite sides of the projection 22 comprises a central convex portion 36 and contiguous concave portions 38 and 40 on opposite sides thereof. The convex portion 36 is of a shape or profile corresponding to a locus of constant distance between the point of closest contact of shaft 14 and the geometric centre P for the shaft 14 pivoting between plus and minus α° from its central position.

By appropriate machining or relieving of the surfaces 26 and 34 the axes of rotation 12A and 14A can be pivoted from the central position by approximately 25° to 30° in opposite directions without effecting the total length of the coupling 24. Thus, one single element 10 can provide a universal coupling in which one shaft can pivot in a cone of 50° to 60°.

As the slot 20 and projection 22 are in mutually orthogonal planes, the drive 10 is in fact restrained to rotate about the pivot point P by the shafts 12 and 14. Thus, there is no need for bearings or other devices to be provided in order to hold the drive element 10 in place. This minimises power loss through friction. Nevertheless, it is envisaged that in practice perhaps a locating ring (made from a self lubricating material eg. nylon) or bearing may be provided with a running clearance about the drive element 10. In heavy load and/or high RMP application it is recommended that a bearing be used.

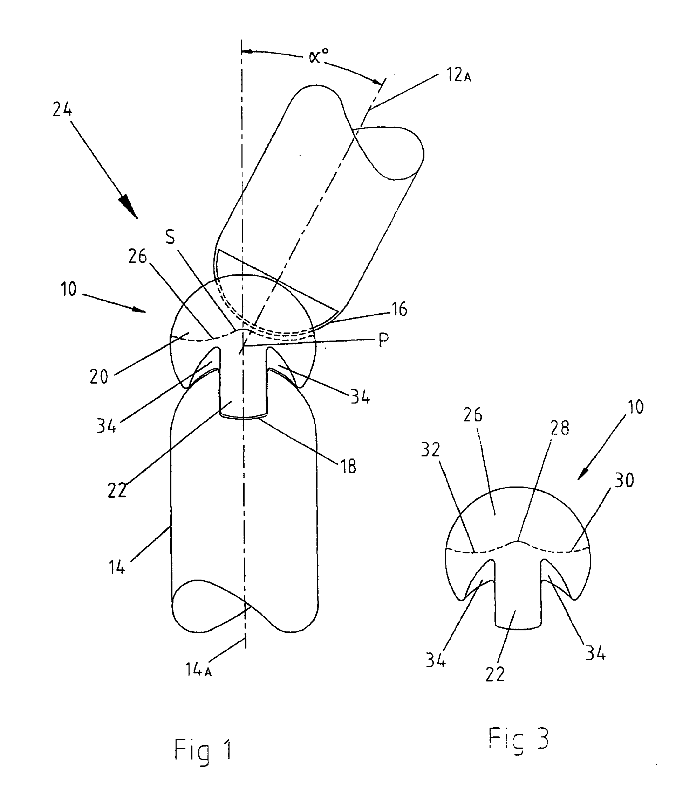

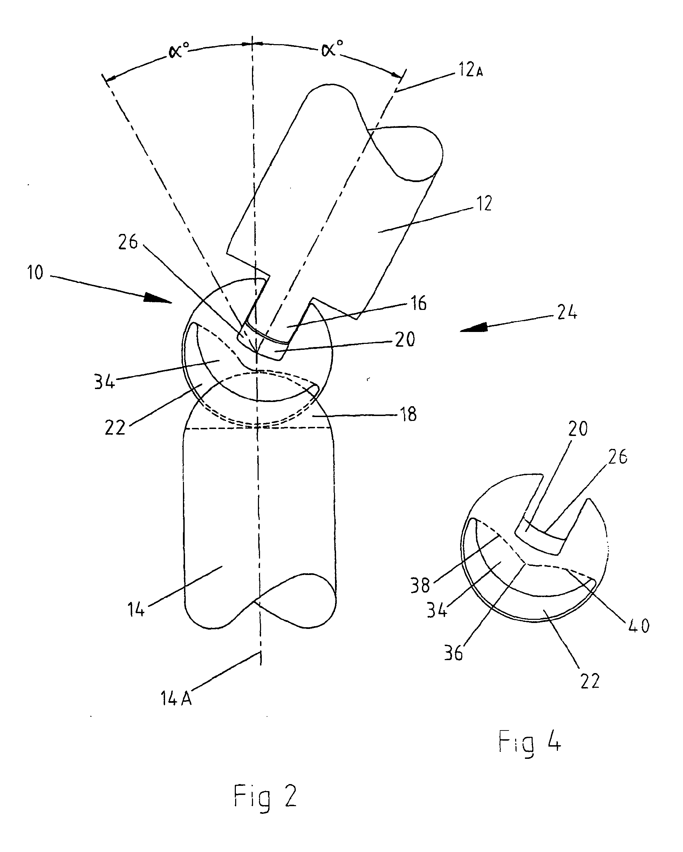

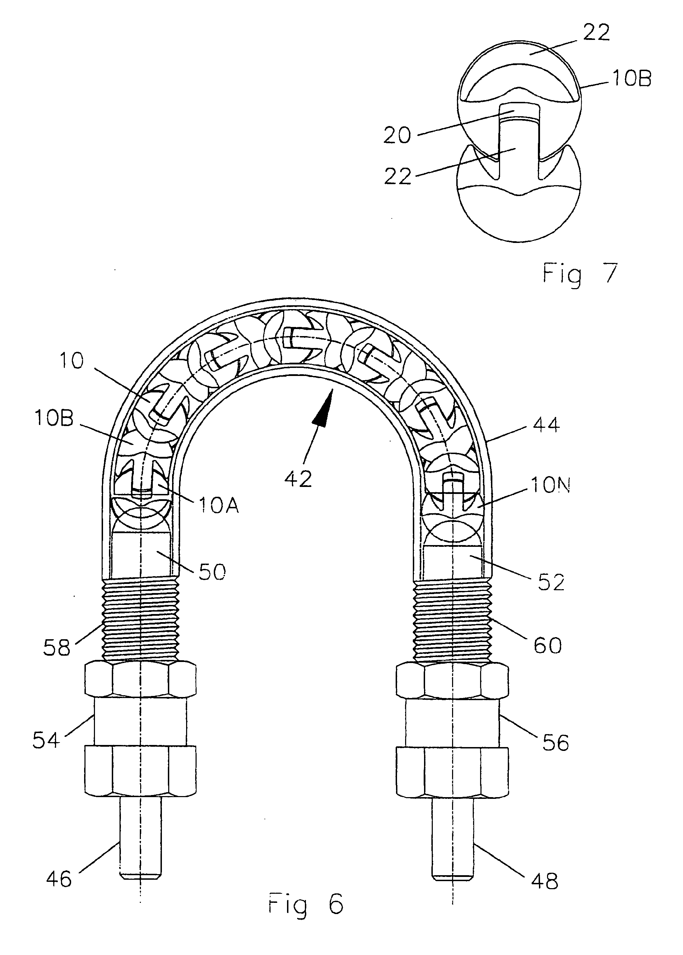

In another embodiment of this invention, shown in Figures 6 and 7, a flexible articulated drive 42 is formed by intermeshing a number of drive elements 10 within a flexible housing, such as a tube 44, and providing torque input and torque output shafts 46 and 48 respectively at each end of the tube 44. In this embodiment, a first one of the drive elements 10A meshs with a tongue 50 of the torque input shaft 10A and a last one of the drive element 10N meshs with a tongue 52 of the torque output shaft 48. Because each drive element 10 is able to pivot relative to an adjacent drive element by approximately 25 to 30° without a change in the spacing therebetween, the flexible tubing can be curved or otherwise contorted about fixed, variable, and for multiple radii without causing any substantial change in spacing between the opposite end elements. For greatest efficiency it is envisaged that the flexible articulated drive 42 may still include a biasing element or other means at one or both ends for fine adjustment of the clearance between drive elements 10. The torque input and output shafts 46, 48 are rotably retained in respective bushes 54 and 56 which are screwed onto threads 58 and 60 provided at opposite ends of the tube 44. The intermeshing of two of the drive elements 10A and 10B in the tube 42 is mostly clearly shown in Figure 7. The drive elements 10A and 10B and indeed all of the elements 10 are of identical shape, configuration and operation as the elements shown in Figures 1-5. The projection 22 of element 10A is received in slot 20 of element 10B. The elements 10A and 10B can pivot relative to each other without the spacing therebetween for a predetermined range of pivot angles in an analogues manner as described above in relation to the embodiments of Figures 1-5. When the elements are rotating they can also slide relative to each other in directions transverse to their axes of rotation due to the inherent nature of the projection in slot meshing. This sliding motion is in the planes which contain the slots 20 and projections 22 of the adjacent intermeshing elements 10. This gives rise to an oscillatory motion of the element 10 when torque is transferred from input shaft 46 to output shaft 48.

Now that an embodiment of the present invention has been described in detail it will be apparent to those skilled in the relevant arts that numerous modifications and variations may be made without departing from the basic inventive concepts. For example, the drive element 10 is shown as comprising a slot 20 and projection 22. However, depending on the nature of the member coupled to the drive element 10 the drive element 10 may comprise either two projections 22 or two slots 20 in mutually orthogonal planes. It is also believed that the element 10 need not necessarily be of a generally spherical shape. Also, the drive element 10 may either be solid (for example be formed by die casting or by the machining of a solid sphere of material) or alternately be hollow. In yet a further modification it is believed that the slots 20 and projections 22 need not necessarily be mutually orthogonal. Rather they may be angularly offset by angles less than 90°. When the elements 10 are arranged in a train such as in Figure 6, it may be preferable for the slots 20 and projections 22 to be offset by say 60° rather than 90° to smooth out the variations in rotational acceleration and deceleration of the elements as they rotate. In this regard it is to be noted that when the elements 10 rotate they are continuously accelerating and decelerating in a manner somewhat similar to a universal joint. By offsetting the angle between the slots 20 and projections 22 in a train of elements 10 the elements will be accelerating and decelerating at different times thereby smoothing out any "jerkiness" in the train as a whole. The offset may vary depending on the number of elements 10 in the train.

## Claims

1. A drive element for coupling together first and second rotatable members having respective axes of rotation which can pivot relative to each other about a pivot point located at the geometric centre of the drive element, the drive element having:
a first coupling means for coupling with the first rotatable member and configured to maintain a substantially constant spacing between the pivot point and loci of closest contact of the first rotatable member with the geometric centre of the drive member for a predetermined range of angles of pivot of said axes relative to each other, the first coupling means is in the form of one of a projection and a slot for engaging with a complementary slot or a projection formed on the first rotatable member; and
a second coupling means for coupling with the second rotatable member and configured to maintain a substantially constant spacing between the pivot point and loci of closest contact of the second rotatable member with the geometric centre of the drive member for a predetermined range of angles of pivot of said axes relative to each other, the second coupling means is in the form of one of a projection and a slot for engaging with a complementary slot or a projection formed on the second rotatable member;
**characterized in that**, for each of the first and second coupling means, the surface of the coupling means adjacent the respective root of the projection or slot is relieved or otherwise shaped from the midpoint of the respective projection or slot in opposite directions along the length of the respective projection or slot to define a bearing surface a length of which is shaped or profiled corresponding to the locus of closest contact of the respective member and respective coupling means.

2. A drive element according to claim 1, further **characterized in that** the first and second coupling means extend in mutually perpendicular directions.

3. A drive element according to claim 2, further **characterized in that** the first coupling means is formed as one of the projection and slot, and the second coupling means is formed as the other of the projection and slot.

4. A drive element according to claim 1, further **characterized in that** the drive element is in the form of a sphere with material removed therefrom to produce said first and second coupling means.

5. A drive element according to claim 1, further **characterized in that** the predetermined range of angles is in the order of up to 50° to 60°.

6. An articulated coupling comprising:
first and second rotatable shafts rotatable about their respective longitudinal axes; and,
a drive element according to any one of claims 1 to 5, the drive element being located between and coupled to the first and second rotatable shafts for transmitting torque from one of the shafts to the other shaft in a clockwise or anticlockwise direction.

7. An articulated flexible drive for transmitting torque along a drive line in both clockwise and anticlockwise directions, said articulated flexible drive comprising:
a plurality of drive elements according to any one of claims 1 to 5; and
a flexible housing for rotatably retaining the plurality of drive elements along the drive line, the drive elements being rotatable about respective rotation axes tangent to the drive line and each having its first and second coupling means intermeshing with at least one adjacent drive element such that adjacent drive elements can slide relative to each other in planes containing the first and second coupling means of adjacent intermeshing drive elements.

## Patentansprüche

1. Ein Antriebselement zum Koppeln eines ersten und zweiten drehbaren Bauglieds mit jeweiligen Rotationsachsen, die relativ zueinander um einen Schwenkpunkt schwenken können, der an der geometrischen Mitte des Antriebselements angeordnet ist, wobei das Antriebselement folgende Merkmale aufweist:
eine erste Kopplungseinrichtung zum Koppeln mit dem ersten drehbaren Bauglied, die konfiguriert ist, um eine im Wesentlichen konstante Beabstandung zwischen dem Schwenkpunkt und den Orten des engsten Kontakts des ersten drehbaren Bauglieds mit der geometrischen Mitte des Antriebsbauglieds beizubehalten, für einen vorbestimmten Bereich von Schwenkwinkeln der Achsen relativ zueinander, wobei die erste Kopplungseinrichtung entweder die Form eines Vorsprungs oder eines Schlitzes aufweist, für die Eingriffnahme mit einem komplementären Schlitz oder einem Vorsprung, der auf dem ersten drehbaren Bauglied gebildet ist; und
eine zweite Kopplungseinrichtung zum Koppeln mit dem zweiten drehbaren Bauglied, die konfiguriert ist, um eine im Wesentlichen konstante Beabstandung zwischen dem Schwenkpunkt und den Orten des engsten Kontakts des zweiten drehbaren Bauglieds mit der geometrischen Mitte des Antriebsbauglieds beizubehalten, für einen vorbestimmten Bereich von Schwenkwinkeln der Achsen relativ zueinander, wobei die zweite Kopplungseinrichtung entweder die Form eines Vorsprungs oder eines Schlitzes aufweist, für die Eingriffnahme mit einem komplementären Schlitz oder einem Vorsprung, der auf dem zweiten drehbaren Bauglied gebildet ist;
**dadurch gekennzeichnet, dass** für die erste und die zweite Kopplungseinrichtung die Oberfläche der Kopplungseinrichtung benachbart zu der jeweiligen Wurzel des Vorsprungs oder Schlitzes ausgenommen ist oder anderweitig geformt ist, von dem Mittelpunkt des jeweiligen Vorsprungs oder Schlitzes in entgegengesetzten Richtungen entlang der Länge des jeweiligen Vorsprungs oder Schlitzes, um eine Lageroberfläche zu definieren, wobei eine Länge derselben geformt oder profiliert ist entsprechend dem Ort des engsten Kontakts des jeweiligen Bauglieds und der jeweiligen Kopplungseinrichtung.

2. Ein Antriebselement gemäß Anspruch 1, das ferner **dadurch gekennzeichnet ist, dass** sich die erste und zweite Kopplungseinrichtung in zueinander senkrechten Richtungen erstrecken.

3. Ein Antriebselement gemäß Anspruch 2, das ferner **dadurch gekennzeichnet ist, dass** die erste Kopplungseinrichtung entweder als der Vorsprung oder der Schlitz gebildet ist, und die zweite Kopplungseinrichtung als das andere von dem Vorsprung oder dem Schlitz gebildet ist.

4. Ein Antriebselement gemäß Anspruch 1, das ferner **dadurch gekennzeichnet ist, dass** das Antriebselement in der Form einer Kugel ist, mit Material, das von derselben entfernt ist, um die erste und zweite Kopplungseinrichtung zu erzeugen.

5. Ein Antriebselement gemäß Anspruch 1, das ferner **dadurch gekennzeichnet ist, dass** der vorbestimmte Winkelbereich in der Größenordnung von bis zu 50° bis 60° liegt.

6. Eine Gelenkkopplung, die folgende Merkmale umfasst:
eine erste und zweite drehbare Welle, die um ihre jeweiligen longitudinalen Achsen drehbar sind; und
ein Antriebselement gemäß einem der Ansprüche 1 bis 5, wobei das Antriebselement zwischen der ersten und zweiten drehbaren Welle angeordnet ist und mit denselben gekoppelt ist, zum Übertragen eines Drehmoments von einer der Wellen zu der anderen Welle in einer Uhrzeiger- oder Gegenuhrzeigerrichtung.

7. Ein flexibler Gelenkantrieb zum Übertragen eines Drehmoments entlang einer Antriebsleitung in sowohl der Uhrzeiger- als auch Gegenuhrzeigerrichtung, wobei der flexible Gelenkantrieb folgende Merkmale umfasst:
eine Mehrzahl von Antriebselementen gemäß einem der Ansprüche 1 bis 5; und
ein flexibles Gehäuse zum drehbaren Halten der Mehrzahl von Antriebselementen entlang der Antriebsleitung, wobei die Antriebselemente drehbar sind um jeweilige Rotationsachsen tangential zu der Antriebsleitung, und jeweils eine erste und eine zweite Kopplungseinrichtung aufweisen, die mit zumindest einem benachbarten Antriebselement ineinander greifen, so dass benachbarte Antriebselemente relativ zueinander in Ebenen gleiten können, die die erste und zweite Kopplungseinrichtung von benachbarten ineinander greifenden Antriebselementen enthalten.

## Revendications

1. Elément d'entraînement pour coupler ensemble un premier et un deuxième élément rotatif ayant des axes de rotation respectifs qui peuvent pivoter l'un par rapport à l'autre autour d'un point de pivotement situé au centre géométrique de l'élément d'entraînement, l'élément d'entraînement présentant :
un premier moyen de couplage destiné à coupler le premier élément rotatif et configuré pour maintenir un espacement sensiblement constant entre le point de pivotement et des endroits de contact étroit du premier élément rotatif avec le centre géométrique de l'élément d'entraînement pour une plage prédéterminée d'angles de pivotement desdits axes l'un par rapport à l'autre, le premier moyen de couplage étant sous forme d'une saillie et d'une fente destinée à venir en prise avec une fente ou une saillie complémentaire formée sur le premier élément rotatif ; et
un deuxième moyen de couplage destiné à coupler le deuxième élément rotatif et configuré pour maintenir un espacement sensiblement constant entre le point de pivotement et les endroits de contact étroit du deuxième élément rotatif avec le centre géométrique de l'élément d'entraînement pour une plage prédéterminée d'angles de pivotement desdits axes l'un par rapport à l'autre, le deuxième moyen de couplage étant sous forme d'une saillie et d'une fente destinée à venir en prise avec une fente ou une saillie complémentaire formée sur le deuxième élément rotatif ;
**caractérisé par le fait que**, pour chacun des premier et deuxième moyens de couplage, la surface du moyen de couplage adjacente à la racine respective de la saillie ou de la fente est dégagée ou façonnée autrement à partir du milieu de la saillie ou de la fente dans des directions opposées sur la longueur de la saillie ou de la fente respective, de manière à définir une surface d'appui dont une longueur est façonnée ou profilée de manière à correspondre à l'endroit de contact étroit de l'élément respectif et du moyen de couplage respectif.

2. Elément d'entraînement selon la revendication 1, **caractérisé, par** ailleurs, par le fait que les premier et deuxième moyens de couplage s'étendent dans des directions perpendiculaires entre elles.

3. Elément d'entraînement selon la revendication 2, **caractérisé, par** ailleurs, par le fait que le premier moyen de couplage est formé sous forme de l'une parmi la saillie et la fente, et que le deuxième moyen de couplage est formé sous forme de l'autre parmi la saillie et la fente.

4. Elément d'entraînement selon la revendication 1, **caractérisé, par** ailleurs, par le fait que l'élément d'entraînement se présente sous forme d'une sphère avec du matériau enlevé pour produire lesdits premier et deuxième moyens de couplage.

5. Elément d'entraînement selon la revendication 1, **caractérisé, par** ailleurs, par le fait que la plage prédéterminée d'angles est de l'ordre de jusqu'à 50° à 60°.

6. Couplage articulé, comprenant :
un premier et un deuxième arbre rotatif pouvant tourner autour de leurs axes longitudinaux respectifs ; et
un élément d'entraînement selon l'une quelconque des revendications 1 à 5, l'élément d'entraînement étant situé entre et couplé aux premier et deuxième arbres rotatifs, de manière à transmettre le couple de l'un des arbres à l'autre dans le sens des aiguilles d'une montre ou dans le sens contraire aux aiguilles d'une montre.

7. Entraînement flexible articulé pour transmettre le couple suivant une ligne d'entraînement tant dans le sens des aiguilles d'une montre que dans le sens contraire aux aiguilles d'une montre, ledit entraînement flexible articulé comprenant :
une pluralité d'éléments d'entraînement selon l'une quelconque des revendications 1 à 5 ; et
un boîtier flexible destiné à retenir en rotation la pluralité d'éléments d'entraînement suivant la ligne d'entraînement, les éléments d'entraînement étant rotatifs autour d'axes de rotation respectifs tangents à la ligne d'entraînement et présentant, chacun, ses premier et deuxième moyens de couplage engrenant avec au moins un élément d'entraînement adjacent, de sorte que les éléments d'entraînement adjacents puissent coulisser l'un par rapport à l'autre dans des plans contenant les premier et deuxième moyens de couplage d'éléments d'entraînement adjacents engrenant l'un dans l'autre.
